# EUROPÄISCHE PATENTANMELDUNG

(11) **EP 4 586 549 A1**
(43) Veröffentlichungstag der Anmeldung: **16.07.2025**
(21) Anmeldenummer: 24151626.9
(22) Anmeldetag: 12.01.2024
(51) Int. Cl.: H04L 9/40

(54) **VERFAHREN ZUM ERZEUGEN EINES HONEYPOTS**

(71) Anmelder: Robert Bosch GmbH, 70442 Stuttgart (DE)
(72) Erfinder: Ilg, Niclas, 72119 Ammerbuch (DE); Huth, Christopher, 74076 Heilbronn (DE); Sisejkovic, Dominik, 13089 Berlin (DE)

(57) **Zusammenfassung**

Gemäß verschiedenen Ausführungsformen wird ein Verfahren zum Erzeugen eines Honeypots beschrieben, aufweisend Senden von Nachrichten an ein Zielsystem, Beobachten von Reaktionen des Zielsystems auf die Nachrichten, Erzeugen, entsprechend der beobachteten Reaktionen des Zielsystems, eines Zustandsautomaten-Modells für ein oder mehrere Schnittstellen des Zielsystems, Ermitteln, für jede ein oder mehrere bekannte Schwachstellen, jeweils einer Kette von Zuständen des Zustandsautomaten-Modells, die, wenn sie verfolgt wird, eine Ausnutzung der Schwachstelle ermöglicht, Entfernen, für jede der ein oder mehreren Schwachstellen, mindestens einen Zustand der Kette aus dem Zustandsautomaten-Modell und Erzeugen eines Honeypots, der entsprechend dem Zustandsautomaten-Modell auf Nachrichten reagiert.

## Beschreibung

Die vorliegende Offenbarung bezieht sich auf Verfahren zum Erzeugen eines Honeypots.

Die Anzahl von vernetzten Datenverarbeitungsvorrichtungen (inklusive eingebetteter Geräte) steigt rapide an. Ein wichtiger Aspekt all dieser Geräte - seien es Server-Computer im Internet oder Steuereinrichtungen im Automobil- oder im I-oT-Bereich - ist die Produktsicherheit. Honeypots sind Attrappen, die ein solches wertvolles (Ziel-)System imitieren, um Angreifer anzulocken und Informationen über deren Angriffsstrategien und -ziele zu gewinnen. Vor allem in der Unternehmens-IT sind Honeypots ein etabliertes Tool zur Bedrohungsanalyse und sie werden inzwischen auch im Bereich des (Industrial) Internet of Things ((I)loT) eingesetzt. Obwohl Honeypots ein sehr nützliches Werkzeug zur Ergänzung der Cybersicherheitsstrategie sind, erfordert die Implementierung von geeigneten Honeypots für den spezifischen Bedarf und das jeweilige Zielsystem viel manuelle Arbeit von Experten.

Es sind deshalb Herangehensweisen wünschenswert, die eine einfachere Bereitstellung (insbesondere Konfiguration) eines geeigneten Honeypots ermöglichen.

Gemäß verschiedenen Ausführungsformen wird ein Verfahren zum Erzeugen eines Honeypots bereitgestellt, aufweisend: Senden von Nachrichten an ein Zielsystem, Beobachten von Reaktionen des Zielsystems auf die Nachrichten, Erzeugen, entsprechend der beobachteten Reaktionen des Zielsystems, eines Zustandsautomaten-Modells für ein oder mehrere Schnittstellen des Zielsystems, Ermitteln, für jede ein oder mehrere bekannte Schwachstellen, jeweils einer Kette von Zuständen des Zustandsautomaten-Modells, die, wenn sie verfolgt wird, eine Ausnutzung der Schwachstelle ermöglicht, Entfernen, für jede der ein oder mehreren Schwachstellen, mindestens einen Zustand der Kette aus dem Zustandsautomaten-Modell und Erzeugen eines Honeypots, der entsprechend dem Zustandsautomaten-Modell auf Nachrichten reagiert.

Das oben beschriebene Verfahren ermöglicht eine vollständige Automatisierung des Implementierungsprozesses eines Honeypots inklusive seiner Konfiguration wie z.B. die automatische Übernahme des Verhaltens eines bestimmen Betriebssystems (z.B. einer bestimmten Version) aus mehreren unterschiedlichen Betriebssystemen (Versionen). Beispielsweise kann dadurch die Abdeckung von Shell-Interaktionen (die von Interesse sind, z.B. überwacht werden sollen) gesteuert und verbessert werden.

Mittels des Zustandsautomaten-Modells ahmt der Honeypot beispielsweise ein Betriebssystem einschließlich Befehlszeilenschnittstelle und/oder auch eine Anwendung, eine Netzwerkschnittstelle und/oder irgendeine Art von API (Application Programming Interface) nach. Das oben beschriebene Verfahren ermöglicht somit die Simulation einer komplexen Systemumgebung wie einer Kommandozeilenschnittstelle (und deren automatische Anpassung an ein Zielsystem, sodass das Zielsystem nachgeahmt wird).

Dabei wird durch das Entfernen der ermittelten Systemzustände (im Folgenden auch als "Filtern" des Zustandsautomaten-Modells bezeichnet, das Risiko minimiert (oder zumindest erheblich verringert), dass ein Angreifer den Honeypot missbraucht (z.B. für einen Angriff auf ein Drittsystem). Da komplexe Systeme dazu neigen, einem Angreifer ein mächtigeres Werkzeug an die Hand zu geben, kann dadurch verhindert werden, dass ein Angreifer den Honeypot gegen Dritte einsetzt. Dabei wird das Zustandsautomaten-Modells beispielsweise so gefiltert, dass sie den Angriffspfad des Angreifers nicht beeinträchtigen, bis Dritte betroffen sind (z.B. werden solche Zustände entfernt, die unmittelbar eine Gefährdung für Drittsysteme bedeuten, z.B. in den denen eine Kommunikation mit einem Drittsystem erfolgt).

Im Folgenden werden verschiedene Ausführungsbeispiele angegeben.

Ausführungsbeispiel 1 ist ein Verfahren zum Erzeugen eines Honeypots, wie oben beschrieben.

Ausführungsbeispiel 2 ist ein Verfahren nach Ausführungsbeispiel 1, wobei für jede der ein oder mehreren Schwachstellen ein Zustand in der jeweiligen Kette von Zuständen ermittelt und aus dem Zustandsautomaten-Modell entfernt wird, der es verhindert, dass die Schwachstelle ausgenutzt wird, wobei als der Zustand ein solcher Zustand ermittelt wird, der in der Kette von Zuständen möglichst weit hinten liegt (d.h. zu dessen Erreichen möglichst viele Interaktionen mit dem Honeypot erforderlich sind), bei dessen Erreichen aber noch kein Schaden verursacht wird.

Dadurch wird gewährleistet, dass ein Angreifer sich möglichst lange mit dem Honeypot beschäftigen muss bzw. kann, ohne Schaden anzurichten.

Ausführungsbeispiel 3 ist ein Verfahren nach Ausführungsbeispiel 1 oder 2, wobei für jede der ein oder mehreren Schwachstellen ein Zustand in der jeweiligen Kette von Zuständen ermittelt, und aus dem Zustandsautomaten-Modell entfernt wird, bei dessen Erreichen eine Kommunikation mit einem Drittsystem (also einer anderen Datenverarbeitungsvorrichtung als der des Angreifers und des Honeypots) durchgeführt wird.

Damit wird verhindert, dass Drittsysteme über den Honeypot angegriffen werden können.

Ausführungsbeispiel 4 ist ein Verfahren nach einem der Ausführungsbeispiele 1 bis 3, wobei das Zustandsautomaten-Modell erzeugt wird, indem ein vorab erzeugtes anderes Zustandsautomaten-Modell für ein anderes Zielsystem entsprechend den beobachteten Reaktionen des Zielsystems angepasst wird.

Dadurch kann das Zustandsautomaten-Modell effizient erzeugt werden, insbesondere dann, wenn Honeypots für verschiedene Zielsysteme erzeugt werden.

Ausführungsbeispiel 5 ist ein Verfahren nach Ausführungsbeispiel 4, wobei das andere Zustandsautomaten-Modell erzeugt wird durch Senden von den und/oder anderen Anfragen an das andere Zielsystem, Beobachten von Reaktionen des anderen Zielsystems auf die Anfragen bzw. die anderen Anfragen und Erzeugen des anderen Zustandsautomaten-Modells entsprechend der beobachteten Reaktionen des anderen Zielsystems.

Es wird also gemäß einer Ausführungsform der Zustandsautomat gemäß einem zweistufigen Vorgehen gelernt, indem zunächst für ein "Basis"-Zielsystem (d.h. das "andere" Zielsystem) ein Zustandsautomat gelernt wird, der dann für das eigentliche Zielsystem angepasst wird. Dabei kann das Zustandsautomaten-Modell für das Basis-Zielsystem für verschiedene Zielsysteme angepasst werden. Es sollte beachtet werden, dass sich im oben allgemein beschriebenen Verfahren das "Zielsystem" auch auf das Basis-Zielsystem beziehen kann und das Erzeugen eines Honeypots, der entsprechend dem Zustandsautomaten-Modell auf Anfragen reagiert, in diesem Schritt noch den Schritt der Anpassung an das Zielsystem enthält. Wenn sich das eigentliche Zielsystem (des Honeypots) und das Basis-Zielsystem nicht erheblich unterscheiden (beispielsweise nur Versionsnummern oder andere Informationen, die ausgegeben werden, angepasst werden), reagiert bei dieser Interpretation der Honeypot dann trotz der Anpassung "entsprechend dem Zustandsautomaten-Modell" auf Anfragen - er ist aber dann ein Honeypot für das eigentliche Zielsystem und nicht für das Basis-Zielsystem, an das die Anfragen geschickt wurden.

Da ein komplexes System, wie z.B. eine Betriebssystem-Shell, weitaus umfangreicher ist als z.B. ein Netzwerkdienst, wird gemäß einer Ausführungsform bei der Anpassung ermittelt, welche Teile des Honeypots eng an das jeweilige kritische Zielsystem angepasst werden müssen und welche Teile von der Basisversion übernommen werden können. Dadurch wird der Aufwand der Versionsanpassung verringert und die Möglichkeit geschaffen schnell auf (neu bekannt gewordene) Angriffe zu reagieren, deren Funktionalität unbekannt ist, oder den Honeypot schnell an neue (Betriebssystem- und oder Schnittstellen-)Versionen anzupassen.

Ausführungsbeispiel 6 ist ein Verfahren nach Ausführungsbeispiel 4 oder 5, wobei das Anpassen des anderen Zustandsautomaten-Modells das Anpassen einer Version der ein oder mehreren Schnittstellen, deren Verhalten das andere Zustandsautomaten-Modell modelliert, entsprechend den beobachteten Reaktionen des Zielsystems aufweist.

Gegebenenfalls braucht das andere Zustandsautomaten-Modell nur geringfügig geändert werden, indem es beispielsweise durch Besonderheiten der Version der ein oder mehreren Schnittstellen, die das Zielsystem bereitstellt, ergänzt wird.

Ausführungsbeispiel 7 ist ein Verfahren nach einem der Ausführungsbeispiele 4 bis 6, wobei das andere Zustandsautomaten-Modell aus einer Menge von anderen Zustandsautomaten-Modellen für das andere Zielsystem oder ein oder mehrere andere Zielsysteme anhand einer Überprüfung, ob das andere Zustandsautomaten-Modell für die Imitation des Zielsystems erforderliche Funktionen erfüllt, ausgewählt wird.

Ausführungsbeispiel 8 ist ein Verfahren nach einem der Ausführungsbeispiele 1 bis 7, wobei beim Erzeugen des Zustandsautomaten-Modells gemäß einem Geheimhaltungskriterium geheim zu haltende Informationen über das Zielsystem aus dem Zustandsautomaten-Modell entfernt werden.

Das Zustandsautomaten-Modell kann also hinsichtlich geheim zuhaltender Informationen (wie Passwörter aber auch Betreiber des Honeypots) gefiltert werden, um z.B. Sicherheitsprobleme für das Zielsystem (z.B. durch bekannt gewordene Passwörter) zu vermeiden.

Ausführungsbeispiel 9 ist eine Honeypot-Erzeugungseinrichtung, eingerichtet zum Durchführen des Verfahrens nach einem der Ausführungsbeispiele 1 bis 8.

Ausführungsbeispiel 10 ist ein Computerprogramm mit Befehlen, die, wenn sie durch einen Prozessor ausgeführt werden, bewirken, dass der Prozessor ein Verfahren nach einem der Ausführungsbeispiele 1 bis 9 durchführt.

Ausführungsbeispiel 11 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 9 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt ein Computernetzwerk.
- Figur 2: veranschaulicht die Erzeugung eines Honeypots gemäß einer Aus-führungsform.
- Figur 3: zeigt ein Ablaufdiagramm, das ein Verfahren zum Erzeugen eines Honeypots gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

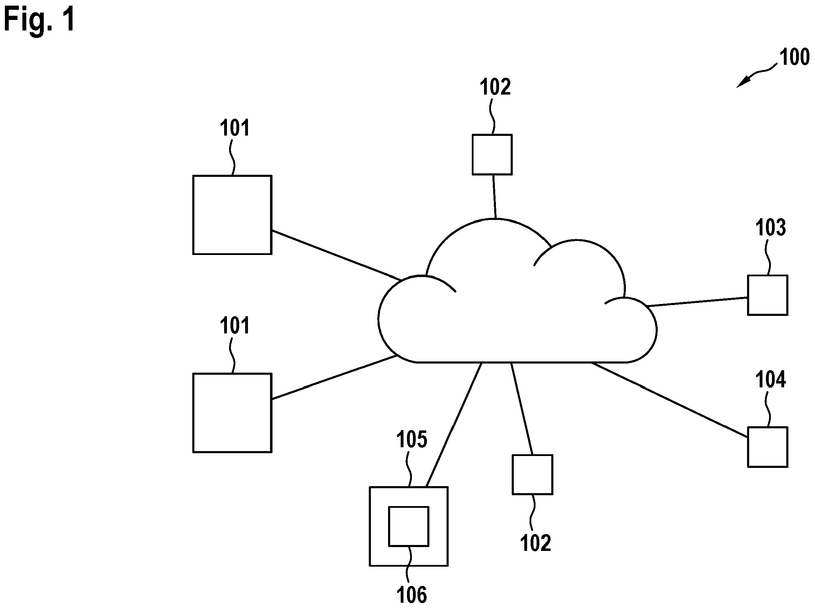

Figur 1 zeigt ein Computernetzwerk 100. Das Computernetzwerk 100 enthält eine Vielzahl von Datenverarbeitungsvorrichtungen 101-105, die durch Kommunikationsverbindungen miteinander verbunden sind. Die Datenverarbeitungsvorrichtungen 101-105 beinhalten z.B. Server-Computer 101 und Steuergeräte 102 sowie und Benutzerendgeräte 103, 104.

Server-Computer 101 stellen verschiedene Dienste zur Verfügung, wie Internet-Seiten, Bankingportale etc. Ein Steuergerät 102 ist z.B. eine Steuereinrichtung für eine Robotervorrichtung wie z.B. eine Steuereinrichtung in einem autonomen Fahrzeug. Die Server-Computer 101 und Steuergeräte 102 erfüllen also verschiedene Aufgaben und typischerweise kann von einem Benutzerendgerät 103, 104 auf einen Server-Computer 101 oder ein Steuergerät 102 zugegriffen werden. Dies ist insbesondere dann der Fall, wenn ein Server-Computer 101 einem Benutzer eine Funktionalität anbietet, wie z.B. ein Banking-Portal. Aber auch ein Steuergerät 102 kann den Zugriff von außerhalb ermöglichen (z.B. damit es konfiguriert werden kann). Je nach Aufgabe eines Server-Computers 101 oder Steuergeräts 102 können diese sicherheitsrelevante Daten speichern und sicherheitsrelevante Aufgaben ausführen. Dementsprechend müssen sie gegen Angreifer geschützt werden. Beispielsweise könnte ein Angreifer, der eines der Benutzerendgeräte 104 verwendet, durch einen erfolgreichen Angriff geheime Daten (wie z.B. Schlüssel) in seinen Besitz bekommen, Konten manipulieren oder auch ein Steuergerät 102 so manipulieren, dass es zu einem Unfall kommt.

Eine Sicherheitsmaßnahme gegenüber solchen Angriffen ist ein sogenannter Honeypot 106 (der von einer der Datenverarbeitungsvorrichtungen 105 implementiert wird). Er stellt vermeintlich eine Funktionalität bereit und dient so als Köder, um potenzielle Angreifer anzulocken. Dabei wird er aber von geheimen Informationen oder kritischer Funktionalität isoliert, so dass Angriffe auf ihn in einer kontrollierten Umgebung erfolgen und das Risiko einer Beeinträchtigung der eigentlichen Funktionalität minimiert wird. So ermöglicht er, Kenntnisse über Angriffe auf ein Zielsystem (z.B. einen der Server-Computer 101 oder eines der Steuergeräte 102) - und damit die Bedrohungslandschaft - zu gewinnen, auf die durch die Implementierung mit geeigneten Maßnahmen auf dem Zielsystem reagiert werden kann, ohne dass diese Angriffe das Zielsystem gefährden.

Ein Honeypot ist also ein Täuschungssystem, das ein Zielsystem (auch als "wertvolles Ziel" bezeichnet) imitiert. Er verleitet Angreifer dazu, den Honeypot anzugreifen und Angriffsvektoren zu enthüllen, die auf das echte wertvolle Ziel abzielen. So ist beispielsweise ein Webserver (bzw. die Webserver-Software) eine beliebte Option, die von einem Honeypot nachgeahmt wird. Da Webserver einen großen Teil des öffentlichen Internets ausmachen, ist es wichtig, Bedrohungen, die auf sie abzielen, kontinuierlich zu überwachen.

Vor allem für die Automobilindustrie sind Honeypots interessant, da es kaum Daten über echte Angriffe gibt. Gemäß verschiedenen Ausführungsformen kann der Honeypot 106 also beispielsweise in einem Fahrzeug implementiert werden. Das Computernetzwerk 100 kann dann zumindest teilweise ein internes Netzwerk des Fahrzeugs beinhalten (aber auch ein Netzwerk, die Konnektivität zu dem Fahrzeug von außerhalb herstellen, wie z.B. ein Mobilfunknetzwerk).

Bei manueller Konfiguration eines Honeypots erfordert die Implementierung eines geeigneten Honeypots für den spezifischen Bedarf und das jeweilige Zielsystem jedoch viel manuelle Arbeit von einem jeweiligen Experten: Um ein Zielsystem zu imitieren, auf dem z.B. ein Debian-Betriebssystem läuft, muss ein Entwickler eines Honeypots Shell-Befehle einschließlich der Interaktion mit dem Dateisystem manuell implementieren, die die Funktionalität von Debian widerspiegeln. Oftmals implementieren deshalb Entwickler nur eine Teilmenge der Befehle, von denen erwartet wird, dass sie von Angreifern verwendet werden. Um ein anderes Betriebssystem wie Windows oder Ubuntu zu imitieren, muss ein Entwickler alle Befehlszeileninteraktionen manuell neu implementieren, um das gewünschte Betriebssystem zu imitieren.

Deshalb wird gemäß verschiedenen Ausführungsformen eine Herangehensweise bereitgestellt, die es ermöglicht, automatisch beliebige Implementierungen und Versionen von verschiedenen Schnittstellen (insbesondere Betriebssystem-Schnittstellen wie eine Befehlszeilenschnittstelle) für eine Honeypot-Implementierung mit Hilfe von gelernten Zustandsautomaten zu übernehmen (d.h. den Honeypot automatisch so zu erzeugen, dass er die Schnittstellen gemäß dem gelernten Zustandsautomaten implementiert).

Der Zustandsautomat eines Programms oder einer Software (insbesondere seiner Schnittstellen) kann mit gut formulierten Eingaben (d.h. allgemein Nachrichten an die Schnittstelle) durch Beobachtung der resultierenden Ausgabe (d.h. Reaktionen) gelernt werden. Das Lernen von Zustandsautomaten kann in zwei Dimensionen unterteilt werden: Aktivität und Sichtbarkeit. Bei der Aktivität gibt es aktive und passive Lernalgorithmen. Während passive Algorithmen nur aus der Beobachtung des Datenverkehrs lernen, z. B. aus dem aufgezeichneten Datenverkehr zwischen einem Client und einem Server, können aktive Algorithmen neue Abfragen z. B. an den Server stellen, um noch mehr Zustände zu entdecken. Um die Sichtbarkeit zu gewährleisten, arbeiten Lernalgorithmen in einem Blackbox-, Greybox- oder in einem Whitebox-Setting. Im White-Box-Setting ist alles innerhalb der Software und des Codes für die Algorithmen sichtbar. So kann das Lernen eines Zustandsautomaten mit zusätzlichen statischen Analysetools arbeiten. Im Blackbox-Setting können nur die Nachrichten an das Lernziel erstellt und die Antworten des Lernziels beobachtet werden, ohne dass die Interna der Software in irgendeiner Form bekannt sind. Im Grey-Box-Setting wird in der Regel eine leichtgewichtige Instrumentierung in das Lernziel kompiliert, um zusätzlich einige Abdeckungsinformationen während der Laufzeit zu erhalten und die Zustandsschätzung zu erleichtern.

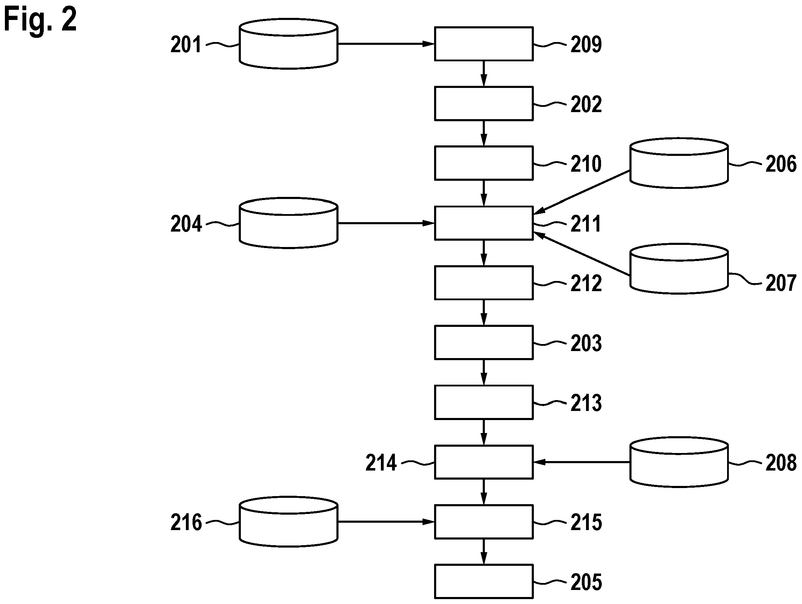

Figur 2 veranschaulicht die Erzeugung eines Honeypots gemäß einer Ausführungsform.

Es sind folgende Komponenten daran beteiligt:
Unkritisches Beispiel-Zielsystem 201: Zustände eines Basis-Zustandsautomaten 202, der dann zu einem Zustandsautomaten 203 für das jeweilige Zielsystem 204 angepasst wird, wird durch Sondierung von unkritischen ein oder mehreren unkritischen Beispiel-Zielsystemen 201 erlernt, die beispielsweise das Betriebssystem einsetzen, das vom zu erzeugenden Honeypot 205 simuliert werden soll (aber ggf. nicht in der korrekten Version).
Zustandsautomaten 203 für das Zielsystem 204: Der abgeleitete Zustandsautomat, der ein komplexes System wie das Betriebssystem des Zielsystems 204 modelliert. Alternativ kann das Betriebssystem auch als ein Zustandsautomat von Zustandsautomaten geschätzt werden.
Zielsystem 204 oder Datenbank mit Informationen über das Zielsystem 204: Der Basis-Zustandsautomat 202 wird an das Zielsystem 204 angepasst, das der Honeypot 205 nachahmen soll.
Datenbank mit Honeypot-Aufzeichnungen (z.B. Protokollen, engl. logs) 206: Diese Datenbank enthält Informationen über frühere Honeypot-Erkenntnisse (d.h. insbesondere über Angriffe, die auf andere Honeypots ausgeführt wurden). Aus diesen kann eine Priorisierung von Komponenten und Funktionalitäten, die von dem Honeypot simuliert werden sollen, abgeleitet werden.
Datenbank mit Spuren (engl. traces) von Angriffen 207: In dieser Datenbank werden Protokolle und Spuren von realen Angriffen gespeichert. Auch diese können für die Priorisierung von Komponenten und Funktionalitäten, die von dem Honeypot simuliert werden sollen, verwendet werden.
Datenbank für Sicherheitslücken 208: Eine Datenbank mit Schwachstellen für alle Arten von Betriebssystemen wie die National Vulnerability Database (NVD).

Die Ermittlung einer Konfiguration für den Honeypot (und ggf. auch die Auswahl einer Architektur für den Honeypot, die konfiguriert wird) erfolgt durch eine Honeypot-Erzeugungseinrichtung (oder Honeypot-Konfigurationseinrichtung), die beispielsweise einem der Benutzerendgeräte 104 entspricht (z.B. einem Computer, mit dem ein Benutzer (wie z.B. ein Systemadministrator), den Honeypot 106 konfiguriert und die Datenverarbeitungsvorrichtung 105 instruiert, den so konfigurierten Honeypot 106 bereitzustellen). Die hierin beschriebenen Verfahren zur Erzeugung eines Honeypots werden also beispielsweise von so einer Honeypot-Erzeugungseinrichtung (beispielsweise automatisch) durchgeführt.

Es werden beispielsweise folgende Schritte durchgeführt.

In 209 wird der Basis-Zustandsautomat 202 auf der Grundlage des unkritischen Beispiel-Zielsystems 201 (oder auch mehrerer davon) ermittelt (z.B. durch Beobachten von Reaktionen des unkritischen Beispiel-Zielsystems 201 von Nachrichten, die (z.B. die Honeypot-Erzeugungseinrichtung) an das Beispiel-Zielsystem 201 sendet).

In 210 werden dynamische Tests und statische Prüfungen durchgeführt, um zu überprüfen, ob der Basis-Zustandsautomat 202 (oder auch mehrere solcher Basis-Zustandsautomaten 202, z.B. für mehrere Beispiel-Zielsysteme 201 oder mehrere Komponenten) korrekt funktioniert, also z.B. ein jeweiliges komplexes System zuverlässig und überzeugend modelliert.

In 211 wird auf der Grundlage der Informationen über das Zielsystem 204 eine Versionsanpassung eines jeweiligen (z.B. entsprechend ausgewählten) Basis-Zustandsautomaten 202 durchgeführt.

Es kann dabei auf der Datenbank mit Honeypot-Aufzeichnungen 206 und der Grundlage der Datenbank mit Spuren von Angriffen 207 eine Priorisierung (z.B. mittels eines Gewichtungsmechanismus) verwendet werden, um Systemkomponenten zu sortieren und zu entscheiden, welche Komponenten im Honeypot 205 simuliert werden. Da es viel schwieriger ist, einen Automaten für ein ganzes System oder einen Automaten eines Automaten zu lernen, ermöglicht es diese Priorisierung, den Aufwand zu reduzieren, indem ausgewählt wird, welche Komponenten einbezogen werden, z. B. welche selten verwendeten Komponenten einbezogen werden. Es können dadurch auch Ressourcen, z. B. in Form von Rechenleistung, gezielt zum Erlernen detaillierterer Versionen bestimmter Komponenten anstatt weniger wichtiger Komponenten eingesetzt werden.

In 212 werden, da der Basis-Zustandsautomat 202 anhand von einem kritischen Zielsystem angepasst wird, sensible (z.B. geheime oder markenschädigende) Daten entfernt. Das Resultat ist der Versions-angepasste (und hinsichtlich sensibler Daten gefilterte) Zustandsautomat 203.

In 213 werden aus dem Versions-angepassten Zustandsautomat 203 Zustände entfernt, um Ketten von Zuständen zu durchbrechen, die es ermöglichen, (bekannte) Schwachstellen auszunutzen, also bösartige Zustände. Es können auch Zustandsübergänge zu solchen bösartigen Zuständen entfernt werden. Beispielsweise werden solche Zustände entfernt, die eine Kommunikation mit einer dritten Parteien betreffen (z.B. bei der eine Kommunikation mit einem Drittsystem durchgeführt wird). Dadurch kann verhindert werden, dass ein Angreifer über den Honeypot 205 Dritte angreift.

Diese Filtern kann auch (zumindest teilweise) schon vor der Versionsanpassung durchgeführt werden.

In 214 werden (optional) Schwachstellen eingeführt: Um Angreifer noch mehr dazu zu verleiten, den Honeypot 205 zu untersuchen, können ausgewählte, bekannte Schwachstellen in den Versions-angepassten (und hinsichtlich sensibler Daten gefilterter) Zustandsautomat 213 eingebaut werden. Da es sich bei einem Zustandsautomaten nicht um ein echtes Betriebssystem handelt (und der Versions-angepasste Zustandsautomat 213 gefiltert wurde), bringt dies keine zusätzlichen Risiken mit sich.

In 215 wird der so erzeugte Zustandsautomat (d.h. wie oben beschrieben verarbeitete Versions-angepasste Zustandsautomat 203) in dem Honeypot 205, z. B. in einem Container, zur Nachahmung des Zielsystems 204, z.B. seiner komplexen Betriebssystemumgebung wie einer System-Shell, eingesetzt, um Daten über die Vorgehensweise von Angreifern gegen kritische Systeme zu sammeln. Dazu wird der erzeugte Zustandsautomat beispielsweise in ein Honeypot-Framework eingefügt, das den Honeypot 205 bereitstellt, wobei noch weitere (z.B. benutzerdefinierte) Konfigurationsdaten 216 berücksichtigt werden können. Der Zustandsautomat simuliert das komplexe System, das der Honeypot 205 nachahmt.

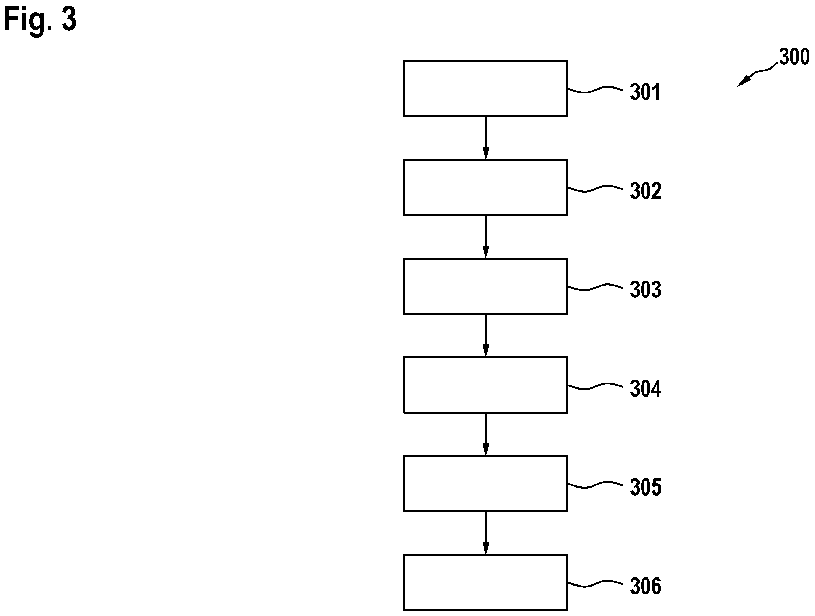

Zusammengefasst wird gemäß verschiedenen Ausführungsformen ein Verfahren bereitgestellt, wie in Figur 3 dargestellt.

Figur 3 zeigt ein Ablaufdiagramm 300, das ein Verfahren zum Erzeugen eines Honeypots gemäß einer Ausführungsform darstellt.

In 301 werden Nachrichten (Shell-Befehle, Netzwerkpakete, applikationspezifische Anfragen etc.) an ein Zielsystem gesendet.

In 302 werden Reaktionen des Zielsystems auf die Nachrichten beobachtet.

In 303 wird entsprechend der beobachteten Reaktionen des Zielsystems ein Zustandsautomaten-Modells für ein oder mehrere Schnittstellen des Zielsystems (Befehlszeilenschnittstelle, Netzwerkschnittstelle, APIs...) erzeugt (d.h. ein Zustandsautomat, der die (bzw. das Verhalten der) ein oder mehreren Schnittstellen modelliert).

In 304 wird für jede ein oder mehrere bekannte Schwachstellen, jeweils eine Kette von Zuständen des Zustandsautomaten-Modells ermittelt, die, wenn sie verfolgt wird, eine Ausnutzung der Schwachstelle ermöglicht.

In 305 wird für jede der ein oder mehreren Schwachstellen mindestens ein Zustand der Kette aus dem Zustandsautomaten-Modell entfernt (d.h. es werden Zustände der Ketten ermittelt, die diese durchbrechen, und diese entfernt, z.B. möglichst weit hinten in der Kette).

In 306 wird ein Honeypot erzeugt, der entsprechend dem Zustandsautomaten-Modell (wie er aus 305 resultiert) auf Nachrichten reagiert.

Gemäß verschiedenen Ausführungsformen wird mit anderen Worten ein Zustandsautomat für eine oder mehrere Komponenten (Betriebssysteme, Softwareprogramme) eines Zielsystems (und damit ggf. eines Systems mit hoher Komplexität) ermittelt und als Grundlage für die automatische Generierung eines Honeypots verwendet. Beispielsweise werden ein oder mehrere Zustandsautomaten von Systemumgebungen, z.B. einer Kommandozeilenschnittstelle eines Betriebssystems (OS), geschätzt. Ein oder mehrere daraus resultierende (geschätzte) Zustandsautomaten können dann für ein oder mehrere interaktive Honeypots verwendet werden. Die Portierung und Anpassung dieser geschätzten Zustandsautomaten, so dass sie den Anschein erwecken, bestimmte Betriebssystem- oder Systemversionen zu haben, kann automatisch erfolgen

Das Verfahren von Figur 3 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z.B. implementiert) werden, die durch die Datenverarbeitungseinheit durchgeführt werden.

Das Verfahren ist also gemäß verschiedenen Ausführungen insbesondere computerimplementiert.

## Patentansprüche

1. Verfahren zum Erzeugen eines Honeypots (106, 205), aufweisend:
Senden (301) von Nachrichten an ein Zielsystem (204);
Beobachten (302) von Reaktionen des Zielsystems (204) auf die Nachrichten;
Erzeugen (303), entsprechend den beobachteten Reaktionen des Zielsystems (204), eines Zustandsautomaten-Modells (203) für ein oder mehrere Schnittstellen des Zielsystems (204);
Ermitteln (304), für jede eine oder mehrere bekannte Schwachstellen, jeweils einer Kette von Zuständen des Zustandsautomaten-Modells (203), die, wenn sie verfolgt wird, eine Ausnutzung der Schwachstelle ermöglicht;
Entfernen (305), für jede der einen oder mehreren Schwachstellen, mindestens einen Zustand der Kette aus dem Zustandsautomaten-Modell (203); und
Erzeugen (306) eines Honeypots (106, 205), der entsprechend dem Zustandsautomaten-Modell (203) auf Nachrichten reagiert.

2. Verfahren nach Anspruch 1, wobei für jede der einen oder mehreren Schwachstellen ein Zustand in der jeweiligen Kette von Zuständen ermittelt und aus dem Zustandsautomaten-Modell (203) entfernt wird, der es verhindert, dass die Schwachstelle ausgenutzt wird, wobei als der Zustand ein solcher Zustand ermittelt wird, der in der Kette von Zuständen möglichst weit hinten liegt, bei dessen Erreichen aber noch kein Schaden verursacht wird.

3. Verfahren nach Anspruch 1 oder 2, wobei für jede der einen oder mehreren Schwachstellen ein Zustand in der jeweiligen Kette von Zuständen ermittelt und aus dem Zustandsautomaten-Modell (203) entfernt wird, bei dessen Erreichen eine Kommunikation mit einem Drittsystem durchgeführt wird.

4. Verfahren nach einem der Ansprüche 1 bis 3, wobei das Zustandsautomaten-Modell (203) erzeugt wird, indem ein vorab erzeugtes anderes Zustandsautomaten-Modell (202) für ein anderes Zielsystem (201) entsprechend der beobachteten Reaktionen des Zielsystems (204) angepasst wird.

5. Verfahren nach Anspruch 4, wobei das andere Zustandsautomaten-Modell (202) erzeugt wird durch Senden von den und/oder anderen Anfragen an das andere Zielsystem (201), Beobachten von Reaktionen des anderen Zielsystems (201) auf die Anfragen bzw. die anderen Anfragen und Erzeugen des anderen Zustandsautomaten-Modells (202) entsprechend der beobachteten Reaktionen des anderen Zielsystems (201).

6. Verfahren nach Anspruch 4 oder 5, wobei das Anpassen des anderen Zustandsautomaten-Modells (202) das Anpassen einer Version der ein oder mehreren Schnittstellen, deren Verhalten das andere Zustandsautomaten-Modell (202) modelliert, entsprechend den beobachteten Reaktionen des Zielsystems (204) aufweist.

7. Verfahren nach einem der Ansprüche 4 bis 6, wobei das andere Zustandsautomaten-Modell (202) aus einer Menge von anderen Zustandsautomaten-Modellen (202) für das andere Zielsystem (201) oder ein oder mehrere andere Zielsysteme (201) anhand einer Überprüfung, ob das andere Zustandsautomaten-Modell (202) für die Imitation des Zielsystems (204) erforderliche Funktionen erfüllt, ausgewählt wird.

8. Verfahren nach einem der Ansprüche 1 bis 7, wobei beim Erzeugen des Zustandsautomaten-Modells (203) gemäß einem Geheimhaltungskriterium geheim zu haltende Informationen über das Zielsystem (204) aus dem Zustandsautomaten-Modell (203) entfernt werden.

9. Honeypot-Erzeugungseinrichtung (104), eingerichtet zum Durchführen des Verfahrens nach einem der Ansprüche 1 bis 8.

10. Computerprogramm mit Befehlen, die, wenn sie durch einen Prozessor ausgeführt werden, bewirken, dass der Prozessor ein Verfahren nach einem der Ansprüche 1 bis 9 durchführt.

11. Computerlesbares Medium, das Befehle speichert, die, wenn sie durch einen Prozessor ausgeführt werden, bewirken, dass der Prozessor ein Verfahren nach einem der Ansprüche 1 bis 9 durchführt.
